# NEUE EUROPÄISCHE PATENTSCHRIFT

(11) **EP 1 588 759 B2**
(45) Veröffentlichungstag und Bekanntmachung des Hinweises auf die Entscheidung über den Einspruch: **21.06.2017**
(45) Hinweis auf die Patenterteilung: 23.01.2013
(21) Anmeldenummer: 05003520.3
(22) Anmeldetag: 18.02.2005
(51) Int. Cl.: B01J 2/00, B01J 20/12, A01K 1/015

(54) **Verfahren zur Herstellung von Haustierstreu**
Method of producing pet litter
Procédé pour produire de la litière pour animaux domestiques

(30) Priorität: 19.02.2004 DE 102004008019
(43) Veröffentlichungstag der Anmeldung: 26.10.2005
(73) Patentinhaber: Imerys Metalcasting Germany GmbH, 46047 Oberhausen (DE)
(72) Erfinder: Krause, Annette, 44789 Bochum (DE); Gassmann, Franz Josef, 45663 Recklinghausen (DE); Koch, Dietrich, Dr., 65366 Geisenheim (DE)
(74) Vertreter: Nash, David Allan

(56) Entgegenhaltungen:
- EP-A1- 0 716 806
- EP-A1- 0 862 853
- EP-B1- 0 603 773
- DE-A1- 4 440 952
- DE-A1- 19 843 887
- DE-A1- 19 843 887
- DE-A1-102004 008 018
- DE-A1-102004 008 019
- DE-C2- 4 312 279
- FR-A1- 2 821 238
- US-A- 3 029 783
- US-A- 4 671 208
- US-A- 5 183 655
- WO 02/067666 A1 (als englische Übersetzung AU 2002244727 B2) 06.09.2002

## Beschreibung

Die Erfindung betrifft ein Verfahren zur Herstellung eines Tierabfall absorbierenden Streumittels für Haustiere, wonach Körner eines Ausgangsgranulates vorgegebener Körnung mit einem pulverförmigen tonmineralischen Absorptionsmittel mit zugesetztem optischem Aufheller unter Flüssigkeitszugabe gemischt und anschließend getrocknet werden, so dass die entstehenden Fertiggranulatkörner mit einem Kern aus dem Ausgangsgranulat und einem umhüllenden Mantel aus der Absorptionsmittelbeschichtung ausgerüstet sind.

Ein derartiges Verfahren wird beispielhaft in der FR 2 821 238 A1 oder auch der DE 198 43 887 A1 beschrieben. Ähnliche Verfahren sind Gegenstand der DE 10 2004 008 018 A1 oder auch DE 195 09 747 A1.

Die bekannten Verfahren haben sich grundsätzlich bewährt. Die produzierten Fertiggranulatkörner sind jedoch von der Handhabung her nicht besonders vorteilhaft. Denn das Streuverhalten und auch die Fähigkeit zur Klumpenbildung bzw. Agglomeration sind verbesserungsbedürftig. Ebenso kann das optische Erscheinungsbild nicht überzeugen.

Das gilt auch für die bekannten Lehren nach der DE 690 10 535 T2 bzw. der DE 43 28 285 C2. Im letztgenannten Fall kommt ein Tierstreu zum Einsatz, welches mindestens ein feuchtigkeitsabsorbierendes organisches Material als Partikelkern aufweist, wobei der Partikelkern von einem Partikelmantel vollständig umgeben ist, welcher aus einem mineralischen Material besteht. Bei dem mineralischen Material kann es sich um Glimmer oder Vermiculit handeln.

Darüber hinaus ist ein Verfahren zur Herstellung eines insbesondere flüssigen Tierabfall absorbierenden Streumittels für Haustiere durch die US-PS 4 591 581 bekannt. An dieser Stelle wird so vorgegangen, dass einzelne mineralische Körner mit einer Korngröße unterhalb von 2 mm im Wesentlichen getrocknet und dann mit Wasser gemischt werden. Anschließend wird diese Mischung verdichtet und in einzelne Partikel gewünschter Größe zerkleinert. Als mineralische Ausgangsstoffe kommen Tonmineralien zum Einsatz.

Darüber hinaus ist es allgemein bekannt, wasserquellfähigen Natriumbentonitton in Verbindung mit einer Tierabfall absorbierenden Zusammensetzung einzusetzen, wie dies im Rahmen der EP 0 378 421 B1 beschrieben wird. Dabei lässt sich flüssiger Tierabfall selektiv aus einem Abfallkasten entfernen, weil insofern eine agglomerierte Masse erzeugt wird, welche die absorbierende Zusammensetzung und den flüssigen Tierabfall beinhaltet. Diese agglomerierte Masse ist von ausreichender Größe und Kohärenzkraft, um aus dem Abfallkasten entfernt zu werden.

Die bekannten Vorgehensweisen haben sich grundsätzlich bewährt, was die Flüssigkeitsaufnahmefähigkeit des eingesetzten Tonminerals und dessen Agglomeration angeht, um einzelne Klumpen aus einer zugehörigen Abfallbox entfernen zu können. Allerdings lässt das Streuverhalten der bekannten Granulate zu wünschen übrig. Das lässt sich im Wesentlichen auf die unzureichende Fähigkeit zur Agglomeration sowie das für die Handhabung zu geringe Gewicht zurückführen. Von besonderer Bedeutung ist ferner, dass das optische Erscheinungsbild der Fertiggranulatkörner nicht befriedigen kann. Hier will die Erfindung insgesamt Abhilfe schaffen.

Der Erfindung liegt das technische Problem zugrunde, ein geeignetes Verfahren zur Herstellung eines Tierabfall absorbierenden Streumittels anzugeben, nachdem sich vorteilhaft Tierstreu mit günstigem Streuverhalten und zuverlässiger Klumpenbildung herstellen lässt und zudem durch besonders ansprechendes Aussehen überzeugt.

Zur Lösung dieser technischen Problemstellung ist ein gattungsgemäßes Verfahren dadurch gekennzeichnet, dass das Ausgangsgranulat zu ca. 60 bis 80 Gew.% und das Absorptionsmittel zu ca. 20 bis 40 Gew.% in der Mischung vorliegt, und dass die Schichtdicke der Absorptionsmittelbeschichtung 0,1 bis 3 mm bei einem Schüttgewicht der Fertiggranulatkörner zwischen 500 g/l und 700 g/l beträgt, wobei der Anteil des Aufhellers in der Absorptionsmittelbeschichtung weniger als 10 Gew.% beträgt. Vorzugsweise verfügen die Fertiggranulatkörner über eine Körnung von mehr als 2 mm, insbesondere mehr als 3 mm.

Auf diese Weise werden problemlos ausreichend große Klumpen gebildet, um diese aus einer zugehörigen Streubox entfernen zu können. Tatsächlich sorgt das den Mantel bildende pulverförmige tonmineralische Absorptionsmittel dafür, dass die einzelnen Fertiggranulatkörner problemlos agglomerieren und wegen ihrer vorgegebenen Körnung von mehr als 2 mm, insbesondere mehr als 3 mm auch Klumpen ausreichender Größe bilden. Gleichzeitig lässt sich das solchermaßen hergestellte Streumittel bzw. Tierstreu einfach handhaben, weil das Schüttgewicht zwischen 500 g/l und 700 g/l beträgt. Insbesondere wird man das Schüttgewicht im Bereich von 500 g/l bis 600 g/l einstellen.

Dadurch wird die Handhabung gegenüber beispielsweise Bentonit als Streumittel mit einem hohen Schüttgewicht von 900 g/l bis 1000 g/l deutlich verbessert. Gleichzeitig ist das Streuverhalten vergleichbar, wobei aufgrund der vorgegebenen Körnung Staubentwicklung oder dergleichen nicht zu befürchten ist. Infolge des Einsatzes eines optischen Aufhellers im Absorptionsmittel und folglich dem Mantel der Fertiggranulatkörner wird zudem ein ansprechendes Äußeres zur Verfügung gestellt. Tatsächlich überzeugen die erfindungsgemäßen Fertiggranulatkörner durch ein besonders helles bzw. weißes äußeres Aussehen. Das beeinflusst die Vermarktungschancen außerordentlich und verleiht dem Produkt eine Assoziation im Sinne von sauber und rein. Außerdem wird eine besondere hygienische Wirkung suggeriert. Hierin sind die wesentlichen Vorteile zu sehen.

Optional greift die vorliegende Innovation auf ein vorzugsweise tonmineralisches Ausgangsgranulat vorgegebener Körnung zurück, welches mit einem ebenfalls tonmineralischen Absorptionsmittel gemischt wird. Selbstverständlich kann das tonmineralische Ausgangsgranulat ganz oder teilweise durch leichtere Materialien substituiert werden. Hierzu gehört beispielhaft und nicht einschränkend Calciumsilikat(hydrat), Porenbeton, Schaumbeton, Blähglas, Perlit, Bims etc..

Nach einer ersten Alternative kommen also sowohl für das Ausganggranulat als auch für das Absorptionsmittel überwiegend, d. h. zu mehr als 50 Gew.-%, ein Tonmineral zum Einsatz. Nach einer zweiten Ausgestaltung können aber auch die vorerwähnten Hauptbestandteile zu mehr als 50 Gew.-% wie beispielsweise Calciumsilikat(hydrat), Porenbeton, Blähglas und andere für den Kern Verwendung finden. Das tonmineralische Absorptionsmittel besteht dabei nach wie vor überwiegend, d. h. zu mehr als 50 Gew.-%, aus einem Tonmineral. Selbstverständlich sind auch (nicht tonmineralische) Zusätze ergänzend denkbar.

Bei der zugegebenen Flüssigkeit handelt es sich regelmäßig um Wasser. Anschließend wird die Mischung aus dem Ausgangsgranulat und der Beschichtung aus dem Absorptionsmittel getrocknet, so dass insgesamt Fertiggranulatkörner mit einem Kern aus dem Ausgangsgranulat und einem umhüllenden Mantel aus der Absorptionsmittelbeschichtung entstehen.

Dabei liegt die Absorptionsmittelbeschichtung obligatorisch als Tonmineral vor bzw. ist auf einer solchen Basis gefertigt. Das heißt, der Anteil von Tonmineralien in der Absorptionsmittelbeschichtung beträgt mehr als 50 Gew.-%. Dagegen mag das den Kern bildende Ausgangsgranulat grundsätzlich jedwede Konsistenz aufweisen, muss also nicht notwendigerweise tonmineralischen Ursprungs sein. So können übliche (mineralische) Granulate wie Perlite, Blähglas, Bims etc. als Hauptbestandteile eingesetzt werden. Entscheidend ist, dass durch den Mischvorgang des Ausgangsgranulates mit dem pulverförmigen tonmineralischen Absorptionsmittel - ob dieser nun trocken oder unter Flüssigkeitszugabe erfolgt - Fertiggranulatkörner erzeugt werden. Diese verfügen in ihrem Kern über das Ausgangsgranulat und in ihrem Mantel über das Absorptionsmittel, wobei sich durch den Mischvorgang und die damit verbundenen Rührbewegungen meistens eine kugelige Form der fertigen Körner einstellt.

In diesem Zusammenhang greift die Erfindungslehre in der Regel auf einen Mischer zurück, bei welchem ein Granulierteller bzw. eine Granuliertrommel gegenläufig im Vergleich zu Rührwerk-Flügeln rotiert. Dadurch kommt es zu einer besonders intensiven Durchmischung des Ausgangsgranulates mit dem Absorptionsmittel. Das kann beispielsweise in einem Eirich-Mischer oder auch in einem Lödige-Mischer geschehen.

Üblicherweise werden die Körner des Ausgangsgranulates während oder nach dem Trocknen zur Verbesserung der Abriebfestigkeit der Absorptionsmittelbeschichtung mittels eines Bindemittels besprüht, bei dem es sich um ein solches auf Betonitbasis handeln kann. Sofern jedoch die Abriebfestigkeit schon von vornherein gegeben ist und sich als ausreichend erweist, mag selbstverständlich auf einen solchen Sprühvorgang verzichtet werden. Das gilt auch für einen abschließenden Siebvorgang, mit dessen Hilfe die beschichteten Körner des Ausgangsgranulates (die erzeugten Fertiggranulatkörner) nach dem Trocknen sowie gegebenenfalls dem Besprühen gesiebt werden. Denn auch dieser Klassifizierungsvorgang ist als Option anzusehen.

Im Rahmen der Erfindung kommt also nicht mehr ein durch Sieben erhaltenes Tonmineral bestimmter Körnungsstruktur als Streumittel zur Aufnahme von insbesondere flüssigem Tierabfall zum Einsatz, sondern vielmehr ein Granulat, dessen Fertiggranulatkörner mit einem Kern aus dem Ausgangsgranulat ausgerüstet sind und über einen umhüllenden Mantel aus der tonmineralischen Absorptionsmittelbeschichtung verfügen. Dabei liegt die Absorptionsmittelbeschichtung in einer Schichtdicke von regelmäßig 0,1 bis 3 mm, insbesondere 0,1 bis 2 mm vor. Die Körner des Ausgangsgranulates mögen im Ursprungszustand eine Körnung von 0,1 bis 10 mm, insbesondere 0,1 bis 5 mm, vorzugsweise 0,2 bis 2 mm aufweisen.

Dabei mag das Ausgangsgranulat auf tonmineralischer Basis als Schichtsilikat, wie beispielsweise ein Smektit oder Vermiculit, vorliegen. Zur Erhöhung der Flüssigkeitsaufnahme kann das betreffende Ausgangsgranulat bzw. Schichtsilikat mit beispielsweise Natrium oder auch Kalzium aktiviert sein. Auf diese Weise lässt sich die Ladungsdichteverteilung in den Zwischenschichten zur Flüssigkeitsaufnahme gezielt und positiv beeinflussen. Denn bekanntermaßen hängt die innerkristalline Quellung von Dreischichtmineralien, die vor allem in Frage kommen, von der Hydratisierung der Zwischenschicht-Kationen entscheidend ab.

Dabei mag die Aktivierung des Ausgangsgranulates entweder vor dem Mischvorgang oder währenddessen stattfinden. Selbstverständlich liegt es auch im Rahmen der Erfindung, auf beide Alternativen gleichzeitig zurückzugreifen. Wenn die Aktivierung des Ausgangsgranulates während des Mischvorganges vorgenommen werden soll, ist es erforderlich, dass Aktivierungsmaterial, beispielsweise Natrium, den Mischungskomponenten zuzugeben wird. Das kann in Gestalt von Soda respektive Natriumcarbonat geschehen. Alternativ oder zusätzlich kann auch mit Kalziumcarbonat gearbeitet werden, um Calziumionen anstelle der Natriumionen oder ergänzend zu diesen in die Zwischenschichten einzubauen.

Grundsätzlich können beliebige tonmineralische Absorptionsmittel zur Darstellung der Absorptionsmittelbeschichtung Verwendung finden, die mit den Körnern aus dem Ausgangsgranulat in der beschriebenen Art und Weise eine Verbindung einzugehen in der Lage sind. Dabei haben sich Absorptionsmittel auf Basis von Dreischicht-Tonmineralen als besonders günstig erwiesen. Denn solche Tonminerale verfügen - wie beschrieben - nicht nur über eine äußerst ausgeprägte Quellfähigkeit, die den flüssigen Tierabfall aufzunehmen in der Lage ist. Sondern die erfindungsgemäß erreichten Fertiggranulatkörner agglomerieren zu leicht handhabbaren Klumpen, die einwandfrei aus einer zugehörigen Streubox entfernt werden können. Die Eigenschaften sind also vergleichbar mit denjenigen, die von herkömmlichen Streumitteln zur Verfügung gestellt werden. Dabei kann die Flüssigkeit in dem Mantel sowohl adsorbiert als auch absorbiert werden, so dass man auch von einer Absorptions-/Adsorptionsmittelbeschichtung sprechen kann. Ferner ist natürlich auch der Kern zur Flüssigkeitsaufnahme in der Lage. Meistens dient er jedoch lediglich als Träger für die Absorptions/Adsorptionsmittelbeschichtung, welche primär die Flüssigkeit aufnimmt.

Dabei ist die Fließfähigkeit und Handhabbarkeit des erfindungsgemäßen Fertiggranulates deutlich gegenüber bisherigen Ausführungsformen verbessert. Das lässt sich auf die nahezu kugelförmige Gestalt nach der Herstellung zurückführen. Dabei können sowohl unterschiedliche als auch gleiche Tonminerale für einerseits das Ausgangsgranulat und andererseits das Absorptionsmittel zum Einsatz kommen. Im einfachsten Fall wird Montmorillonit verwendet, welcher den Hauptbestandteil marktüblicher Bentonite darstellt. Dabei kann beispielsweise Kalziumbentonit zum Einsatz kommen, ein natürlicher Natriumbentonit oder technisch aktivierter Natriumbentonit.

In diesen sämtlichen Fällen wird das Ausgangsgranulat in einen Mischer gegeben und mit dem Absorptionsmittel gemischt. Dabei mag das Absorptions-mittel als Pulver vorliegen und aus dem gleichen Werkstoff wie das Ausgangsgranulat bestehen. Durch die Zugabe von Flüssigkeit, beispielsweise Wasser, führt der anschließende Mischvorgang dazu, dass sich das zunächst pulverförmige Absorptionsmittel als Beschichtung im Sinne eines umhüllenden Mantels um die einzelnen Ausgangsgranulatkörner legt. Auf diese Weise erhalten die hergestellten Körner die Form der Fertiggranulatkörner, beispielsweise solche mit nahezu kugelförmiger Gestalt. Dadurch verbessert sich das Rieselverhalten ausdrücklich und ist die Handhabbarkeit verbessert. Wenn darüber hinaus das Ausgangsgranulat in einem bestimmten Kornspektrum vorliegt, ist durch diesen Vorgang ferner gewährleistet, dass die Körngröße der hergestellten Fertiggranulatkörner keine große Variationsbreite aufweist.

Tatsächlich wird nämlich durch den Mischvorgang erreicht, dass unterschiedliche Größen der Ausgangsgranulatkörner durch eine entsprechend dicke oder dünne Beschichtung aus dem Absorptionsmittel gleichsam ausgeglichen werden, so dass selbst bei einer Körnung des Ausgangsmaterials von 0,1 bis 10 mm nach dem anschließenden Mischvorgang Fertiggranulatkörner mit einer Körnung von lediglich 3 bis 7 mm vorliegen, also die Variationsbreite bei dem Mischvorgang auf ca. die Hälfte oder noch weniger sinkt. - Es sollte betont werden, dass die Flüssigkeitszugabe nur optional erfolgt, also nicht zwingend ist. Das heißt, vom Erfindungsgedanken werden selbstverständlich auch Trockenmischungen abgedeckt.

Dem Absorptionsmittel bzw. Tonmineral oder Bentonit wird ausdrücklich der optische Aufheller beigefügt, und zwar in der Regel in einer Menge von ca. 5 Gew.-% oder weniger, bezogen auf das Absorptionsmittel. Das kann in der wässrigen Lösung geschehen. Bei diesem optischen Aufheller handelt es sich bevorzugt und nicht einschränkend um Titandioxid, welches auch bei der Papierherstellung als Aufheller Verwendung findet. Alternativ oder ergänzend kann auch Calciumkarbonat und/oder Kaolin oder können andere Weißpigmente eingesetzt werden. In jedem Fall wird man den sogenannten Weißgrad so einstellen, dass er mehr als 60, meistens mehr als 75, insbesondere sogar mehr als 80, beträgt.

Bekanntermaßen drückt der Weißgrad als Maßzahl aus, welche Farbempfindung ein weißer Körper hervorruft. Der Weißgrad kann dabei beispielsweise wie üblich mit Hilfe der sogenannten Weißgradformel nach Berger mit Hilfe einer Weißlichtquelle, z. B. Xenonlampe, bestimmt werden. Verwiesen wird an dieser Stelle auf die DE 28 06 195 A1 oder auch die DE 30 07 796 C2.

Das Bindemittel zur Erhöhung der Abriebfestigkeit der Absorptionsmittelbeschichtung ist in der Regel Methylzellulose oder auch Wasserglas, welches - wie der Sodazusatz - den beiden Hauptmischungskomponenten in Gestalt des Ausgangsgranulates und dem Absorptionsmittel während der Mischung (und/oder zuvor) beigemengt wird. Auch Bentonit kann - wie beschrieben - als Bindemittel Verwendung finden.

Da das Ausgangsgranulat in der Regel ohnehin über einen Wasseranteil von ca. 10 Gew.-% verfügt, kann eine zusätzliche Flüssigkeitszugabe entfallen. Sofern diese jedoch vorgesehen ist, wird mit einer Wasserzugabe von 10 bis 20 Gew.-% bezogen auf die Mischung gearbeitet. Das heißt, der Gewichtsanteil des Wassers in der Mischung beträgt maximal 30 Gew.-%.

Erfindungsgemäß liegt das Ausgangsgranulat zu ca. 60 bis 80 Gew.% in der Mischung vor, während das Absorptionsmittel für den Rest, also ca. 20 bis 40 Gew.% in der Mischung, verantwortlich zeichnet. Die letztgenannte Vorgehensweise empfiehlt sich, um die Schüttgewichte zwischen 500 g/l und 700 g/l einzustellen. Denn in diesem Fall kommt meistens ein Kern aus leichtem porösem Material wie Bims, Schaumbeton, Gasbeton bzw. Kalziumsilikat usw. zum Einsatz. Darüber hinaus wird Soda zu ca. 3 bis 8 Gew.%, insbesondere 4 bis 5 Gew.%,. bezogen auf den Anteil des Ausgangsgranulates, zugegeben. Der Anteil des Aufhellers in der Absorptionsmittelbeschichtung beträgt erfindungsgemäß weniger als 10 Gew.%, üblicherweise ca. 5 Gew.% und insbesondere 3 Gew.% oder weniger.

Im Ergebnis wird ein neuartiges Streumittel für Haustiere zur Verfügung gestellt, welches insbesondere flüssigen Tierabfall zu absorbieren in der Lage ist. In diesem Zusammenhang überzeugt das beschriebene Streumittel insbesondere dadurch, dass bedingt durch den Mischungsvorgang des Ausgangsgranulates mit dem Absorptionsmittel Rundgranulatkörner mit nahezu gleicher Korngröße erzeugt werden, die sich problemlos handhaben lassen.

Dabei hat es sich gezeigt, dass die von dem Absorptionsmittel realisierte Schichtdicke von ca. 0,1 bis 3 mm der Absorptionsmittelbeschichtung ausreicht, den flüssigen Tierabfall einwandfrei aufnehmen zu können. Tatsächlich werden Wasseraufnahmeraten von deutlich mehr als 100 Gew.-% erreicht, die sogar noch die angegebenen Werte in der US-PS 4 591 581 für herkömmliche Streumittel übertreffen. Denn die Wasseraufnahme (nach Westinghouse) liegt über 300 Gew.-%, insbesondere sogar über 400 Gew.-%. Im Rahmen der Erfindungslehre nehmen also nahezu ausschließlich die äußeren Schichten des jeweiligen Fertiggranulatkornes an der Flüssigkeitsaufnahme teil, wohingegen der innere Kern nur begrenzt für die Flüssigkeitsaufnahme genutzt wird. Denn zuvor ist es bereits zu der gewünschten Klumpenbildung gekommen.

### Beispiel:

Zunächst wird ein Ausgangsgranulat auf eine bestimmte Ausgangskörnung gebracht. Das kann durch entsprechende Mahlvorgänge erfolgen, wobei eine Körngrößenverteilung von ca. 0,1 mm bis 10 mm erreicht wird.

Im Anschluss daran kann dann die Korngrößenverteilung noch weiter durch Sieben eingegrenzt werden, was jedoch nicht zwingend ist. Das solchermaßen erhaltene Ausgangsgranulat, bei dem es sich beispielhaft und nicht einschränkend um Montmorillonit bzw. Bentonit handelt, wird mit einem Absorptionsmittel (ebenfalls Montmorillonit bzw. Bentonit) in einem Mischer vermengt. Dabei liegt das Absorptionsmittel in Pulverform vor und beträgt gewichtsmäßig in etwa das zwei- bis fünffache, insbesondere zwei bis dreifache, der Masse des Ausgangsgranulates. Diesem Gemisch wird nun noch Wasser zugegeben, und zwar je nach Feuchtegehalt des Ausgangsgranulates. Bewährt hat sich ein Wassergewichtsanteil in der Mischung von bis zu 30 Gew.-%.

Die Mischung wird anschließend miteinander vermengt, wobei sich das pulverförmige Absorptionsmittel, bei dem es sich um Montmorillonit im Beispiel handelt, als Absorptionsmittelbeschichtung um den jeweiligen Ausgangsgranulatkern legt. Dadurch steht nach einem mehrminütigen Mischvorgang ein Rundgranulat zur Verfügung, dessen Korngrößenspektrum im Vergleich zum Ausgangsgranulat deutlich eingegrenzt ist und in einer Körnung von ca. 2 mm bis 7 mm, vorzugsweise ca. 3 mm bis 7 mm, vorliegt.

Die Mischung wird anschließend getrocknet und gegebenenfalls gesiebt, wenn noch eine weitergehende Eingrenzung des Korngrößenspektrums gewünscht wird. Jetzt ist das erfindungsgemäße Fertiggranulat für die Weiterverarbeitung bzw. unmittelbare Verwendung fertig.

## Patentansprüche

1. Verfahren zur Herstellung eines Tierabfall absorbierenden Streumittels für Haustiere, wonach Körner eines Ausgangsgranulates vorgegebener Körnung mit einem pulverförmigen tonmineralischen Absorptionsmittel mit zugesetztem optischem Aufheller unter Flüssigkeitszugabe gemischt und anschließend getrocknet werden, so dass die entstehenden Fertiggranulatkörner mit einem Kern aus dem Ausgangsgranulat und einem umhüllenden Mantel aus der Absorptionsmittelbeschichtung ausgerüstet sind, **dadurch gekennzeichnet, dass das**,
das Ausgangsgranulat zu ca. 60 bis 80 Gew.% und das Absorptions-mittel zu ca. 20 bis 40 Gew.% in der Mischung vorliegt, und dass
die Schichtdicke der Absorptionsmittelbeschichtung 0,1 bis 3 mm bei einem Schüttgewicht der Fertiggranulatkörner zwischen 500 g/l und 700 g/l beträgt, wobei
der Anteil des Aufhellers in der Absorptionsmittelbeschichtung weniger als 10 Gew.% beträgt.

2. Verfahren nach Anspruch 1, **dadurch gekennzeichnet, dass** die Fertiggranulatkörner eine Körnung von mehr als 2 mm und insbesondere mehr als 3 mm aufweisen.

3. Verfahren nach Anspruch 1 oder 2, **dadurch gekennzeichnet, dass** die Fertiggranulatkörner ein Schüttgewicht zwischen 500 g/l und 600 g/l besitzen.

4. Verfahren nach einem der Ansprüche 1 bis 3, **dadurch gekennzeichnet, dass** das Ausgangsgranulat in einer Körnung von 0,1 mm bis 10 mm, insbesondere 0,1 mm bis 5 mm, vorzugsweise 0,5 mm bis 2 mm, eingesetzt wird.

5. Verfahren nach einem der Ansprüche 1 bis 4, **dadurch gekennzeichnet, dass** die Körner des Ausgangsgranulates während oder nach dem Trocknen zur Verbesserung der Abriebfestigkeit der Absorptionsmittelbeschichtung mittels eines Bindemittels besprüht werden.

6. Verfahren nach einem der Ansprüche 1 bis 5, **dadurch gekennzeichnet, dass** als Ausgangsgranulat Schichtsilikate wie beispielsweise Smektite oder Vermiculite zum Einsatz kommen, die vorzugsweise zur Erhöhung ihrer Flüssigkeitsaufnahme mit beispielsweise Natrium oder Kalzium aktiviert sind.

7. Verfahren nach einem der Ansprüche 1 bis 6, **dadurch gekennzeichnet, dass** die Schichtdicke der Absorptionsmittelbeschichtung 0,1 bis 2 mm beträgt.

8. Verfahren nach einem der Ansprüche 1 bis 7, **dadurch gekennzeichnet, dass** es sich bei dem tonmineralischen Ausgangsgranulat und/oder dem tonmineralischen Absorptionsmittel um Montmorillonit als Hauptbestandteil marktüblicher Bentonite handelt.

9. Verfahren nach einem der Ansprüche 1 bis 8, **dadurch gekennzeichnet, dass** es sich bei der Flüssigkeit für den Mischvorgang um Wasser handelt, dem gegebenenfalls Soda in einer Menge von 3 bis 10 Gew.-%, insbesondere 4 bis 5 Gew.-%, bezogen auf das Ausgangsgranulat zugegeben wird.

## Claims

1. Method for producing pet litter for absorbing animal waste, according to which grains of an initial granulate of predetermined grain size are mixed with a powdery clay mineral absorbent material with added optical brighteners by adding liquid and then dried, so that the resulting finished granules are provided with a core consisting of the initial granulate and a surrounding shell consisting of the absorbent material coating, **characterised in that**
the initial granulate is present in the mixture at about 60 to 80 wt% and the absorbent material is present in the mixture at about 20 to 40 wt%; and **in that**
the layer thickness of the absorbent material coating is 0.1 to 3 mm with a bulk weight of the finished granules between 500 g/l and 700 g/l; wherein
the fraction of the optical brightener in the absorbent material coating is less than 10 wt%.

2. Method according to Claim 1, **characterised in that** the finished granules have a grain size of more than 2 mm and, in particular, more than 3 mm.

3. Method according to Claim 1 or 2, **characterised in that** the finished granules have a bulk weight of between 500 g/l and 600 g/l.

4. Method according to one of Claims 1 to 3, **characterised in that** the initial granulate is used with a grain size of 0.1 mm to 10 mm, in particular 0.1 mm to 5 mm, preferably 0.5 mm to 2 mm

5. Method according to one of Claims 1 to 4, **characterised in that** the grains of the initial granulate are sprayed with a binding agent during or after drying to improve the wear resistance of the absorbent material coating.

6. Method according to one of Claims 1 to 5, **characterised in that** clays, such as for example smectite or vermiculite, are used as the initial granulate, which are preferably activated by, for example, sodium or calcium for increasing the liquid absorption thereof.

7. Method according to one of Claims 1 to 6, **characterised in that** the layer thickness of the coating of absorbent material is 0.1 to 2 mm.

8. Method according to one of Claims 1 to 7, **characterised in that** the clay mineral initial granulate and/or clay mineral absorbent material is montmorillonite as the main constituent of commercially available bentonite.

9. Method according to one of Claims 1 to 8, **characterised in that** the liquid for the mixing process is water, to which optionally soda is added at a quantity of 3 to 10% by weight, in particular 4 to 5% by weight, relative to the initial granulate.

## Revendications

1. Procédé de fabrication d'un produit à épandre absorbant les déjections animales pour animaux domestiques, selon lequel on mélange en ajoutant du liquide des granulés d'un granulat de départ d'une granularité définie avec un produit absobant minéral argileux pulvérulent additionné d'un éclaircissant optique et on les fait sécher ensuite, de sorte que les grains du granulat fini soient dotés d'un noyau en granulat de départ et d'une enveloppe d'enrobage en revêtement en produit absorbant, **caractérisé en ce que**
le granulat de départ est présent dans le mélange en une quantité d'environ 60 à 80 pour cent en poids et le produit absorbant d'environ 20 à 40 pour cent en poids, et que
l'épaisseur de couche du revêtement en produit absorbant s'élève à de 0,1 à 3 mm pour une densité en vrac des grains du granulat fini de 500 g/l et de 700 g/l, où
la proportion de l'éclaircissant dans le revêtement en produit absorbant est moins de 10 pour cent en poids.

2. Procédé selon la revendication 1, **caractérisé en ce que** les grains de granulat fini présentent une granularité supérieure à 2 mm et notamment supérieure à 3 mm.

3. Procédé selon la revendication 1 ou la revendication 2, **caractérisé en ce que** les grains de granulat fini ont une densité en vrac de 500 g/l et de 600 g/l.

4. Procédé selon l'une quelconque des revendications 1 à 3, **caractérisé en ce qu'**on met en oeuvre le granulat de départ avec une granularité de 0,1 mm à 10 mm, notamment de 0,1 mm à 5 mm, de préférence de 0,5 mm à 2 mm.

5. Procédé selon l'une quelonque des revendications 1 à 4, **caractérisé en ce que** pour améliorer la résistance à l'abrasion du revêtement en produit absorbant, on vaporise les grains du granulat de départ avec un agent de liaison.

6. Procédé selon l'une quelconque des revendications 1 à 5, **caractérisé en ce qu'**on utilise en tant que granulat de départ des phyllosilicates, comme par exemple la smectite ou la vermiculite, qui pour augmenter leur absorption de liquides sont activés de préférence avec du sodium ou du calcium par exemple.

7. Procédé selon l'une quelconque des revendications 1 à 6, **caractérisé en ce que** l'épaisseur de couche du revêtement en produit absorbant s'élève à de 0,1 à 2 mm.

8. Procédé selon l'une quelconque des revendications 1 à 7, **caractérisé en ce que** le granulat minéral argileux de départ et/ou le produit absorbant minéral argileux sont de la montmorillonite en tant que composant principal de bentonite disponible sur le marché.

9. Procédé selon l'une quelconque des revendications 1 à 8, **caractérisé en ce que** le liquide pour le processus de mélange est de l'eau, à laquelle on ajoute le cas échéant de la soude, dans une quantité de 3 à 10 % en poids, notamment de 4 à 5 % en poids, en rapport au granulat de départ.
